# EUROPEAN PATENT SPECIFICATION

(11) **EP 2 793 520 B1**
(45) Date of publication and mention of the grant of the patent: **21.11.2018**
(21) Application number: 12866095.8
(22) Date of filing: 31.12.2012
(51) Int. Cl.: H04W 72/04, H04W 48/16, H04W 92/18, H04W 72/12

(54) **WIRELESS COMMUNICATION METHOD AND COMMUNICATION APPARATUS**
DRAHTLOSES KOMMUNIKATIONSVERFAHREN UND KOMMUNIKATIONSVORRICHTUNG
PROCÉDÉ ET APPAREIL DE COMMUNICATIONS SANS FIL

(30) Priority: 17.01.2012 CN 201210014036
(43) Date of publication of application: 22.10.2014
(73) Proprietor: ZTE Corporation, Shenzhen City, Guangdong Province 518057, (CN)
(72) Inventor: WU, Shuanshuan, Shenzhen City, Guangdong Province 518057 (CN); SUN, Yunfeng, Shenzhen City, Guangdong Province 518057 (CN); BI, Feng, Shenzhen City, Guangdong Province 518057 (CN); LIANG, Feng, Shenzhen City, Guangdong Province 518057 (CN); YUAN, Yifei, Shenzhen City, Guangdong Province 518057 (CN); YUAN, Ming, Shenzhen City, Guangdong Province 518057 (CN)
(74) Representative: Murgitroyd & Company
(86) International application number: PCT/CN2012/088126
(87) International publication number: WO 2013/107277

(56) References cited:
- WO-A1-2010/049801
- WO-A1-2010/082084
- WO-A1-2011/109941
- WO-A1-2011/109941
- WO-A1-2011/156958
- WO-A2-2011/132896
- CN-A- 102 090 132
- CN-A- 102 246 575

## Description

### Technical Field

The present invention relates to the field of communications, and in particular, to a wireless communication method and communication apparatus.

### Background of the Related Art

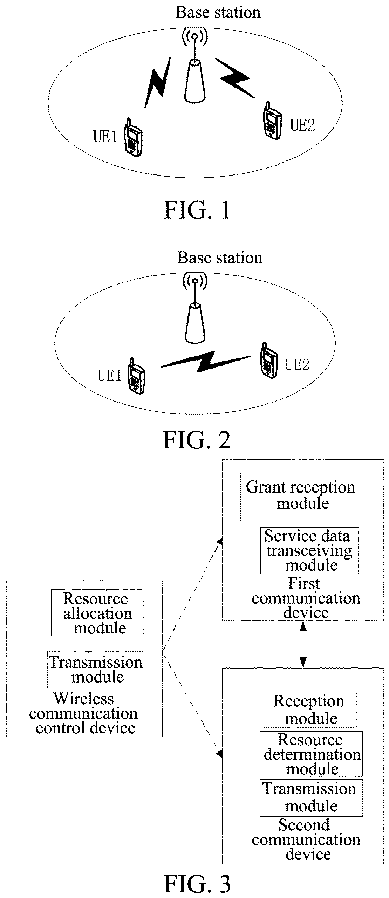

Cellular communication systems make wireless communication technologies boom due to the implementation of multiplexing limited spectrum resources. In the cellular systems, when there are services needed to be transmitted between two User Equipments (UEs for short), service data from UE1 to UE2 will be firstly transmitted to a base station 1 via an air interface, and the base station 1 transmits the user data to a base station 2 through a core network, and the base station 2 then transmits the above service data to UE2 via an air interface. The transmission of service data from UE2 to UE1 uses a similar processing procedure. As shown in Fig. 1, when UE1 and UE2 are located in the same cellular cell, although the base station 1 and the base station 2 are in the same site, a single data transmission will still consume double wireless spectrum resources and the transmitted data will still pass through the core network.

Thus, if UE1 and UE2 are located in the same cell and located closely, the above cellular communication method is obviously not an optimal communication mode. However, in practice, with the diversification of mobile communication services, for example, the social network, the electronic payment and so on are more and more widely applied in the wireless communication system, it makes the requirements of service transmission between close users be growing. Therefore, a Device-to-Device (D2D for short) communication mode is increasingly gained popular attention. The so-called D2D, as shown in Fig. 2, refers to service data not being forwarded via a base station, and instead, being transmitted to a target UE via an air interface by a source UE. This communication mode is different from the communication mode of the traditional cellular system. For users in near field communication, the D2D not only saves wireless spectrum resources, but also reduces pressure on data transmission of the core network. For the D2D communication, service data is directly transmitted between UEs, and therefore, the communication mode thereof can not follow the traditional cellular communication mode. In addition, as the D2D communication and the cellular communication share the spectrum, how to avoid influence on the cellular communication generated by introducing the D2D communication and taking advantage of the D2D communication to the maximum extent to implement effective scheduling and transmission scheme is a key technology studied in the D2D communication field.

WO 2011/132896 A2 provides a method for transmitting a pilot signal for machine to machine (M2M) communication in a wireless communication system and an apparatus thereof. The method comprises the steps of configuring a basic unit including a plurality of pilot resource elements (REs) and data resource elements; allocating pilot signal to the plurality of pilot resource elements to the basic unit; and transmitting the basic unit to a receiver in a subframe unit in accordance with a rule which is previously defined, wherein the resource elements are time-frequency resources defined by one symbol index and one subcarrier index, and the basic unit is transmitted at a subframe except for a subframe at which a control channel is transmitted.

### Summary of the Invention

The embodiments of the present invention provide a wireless communication method according to claim 1, a wireless communication device according to claim 4, a wireless communication device according to claim 6, which solve a problem of transmission and scheduling during D2D communication. Further improvement and embodiment are provided in the dependent claims.

The features of the methods and devices according to the present invention are defined in the independent claims, and the preferable features according to the present invention are defined in the dependent claims

Also provided is a wireless communication method, comprising:
a first communication device receiving first grant from a network node, the first grant at least comprising first resource allocation information for allocating resources;
the first communication device receiving second grant from a second communication device,
   the second grant at least comprising a modulation and coding scheme of service data;
the first grant and the second grant being used for scheduling service data transmission between the first communication device and the second communication device; and
the first communication device receiving, according to the scheduling, service data transmitted by the second communication device; and/or the first communication device transmitting, according to the scheduling, service data to the second communication device.

Preferably, the second grant further comprises second resource allocation information indicating resources for transmitting the service data, the indicated resources being a subset of the resources allocated by the first resource allocation information.

Preferably, the first resource allocation information includes time-domain resource allocation information and/or frequency-domain resource allocation information, the time-domain resource allocation information indicating subframe locations, and the frequency-domain resource allocation information indicating physical resource block locations.

Preferably, the second grant is transmitted while transmitting the service data; or the second grant is used for semi-persistent scheduling, and is transmitted in an initialized or re-initialized semi-persistent scheduling period.

Preferably, a resource location for transmitting the second grant is fixed, and the first communication device detects the second grant at the fixed location; or
the first grant indicates a resource location for transmitting the second grant, and the first communication device detects the second grant according to the indication; or
the first communication device performs blind decoding on the second grant in the resources allocated by the first grant.

Preferably, the first grant further comprises any one of the following information or a combination thereof: a power control command for determining a transmission power of the service data; precoding information for indicating the number of transmission ports and/or a transmission precoding matrix index of the service data and/or the second grant; and reference signal information for indicating a cyclic shift and/or an orthogonal cover code of a demodulation reference signal of the service data.

Preferably, the first grant is high-layer signaling, and is carried through radio resource control signaling.

Preferably, the second grant further comprises any one of the following information or a combination thereof: a power control command for determining a transmission power of the service data; precoding information for indicating the number of transmission ports and/or a transmission precoding matrix index of the service data; and reference signal information for indicating a cyclic shift and/or an orthogonal cover code of a demodulation reference signal of the service data.

Preferably, the second grant is physical layer signaling, and is transmitted in a format of control information.

Preferably, the modulation and coding scheme is determined by the second communication device according to a measurement result fed back by the first communication device; or the modulation and coding scheme is determined by the second communication device measuring a reference signal transmitted by the first communication device.

Also provided is a wireless communication device, comprising:
a grant reception module, configured to receive first grant from a network node, the first grant at least comprising first resource allocation information for allocating resources; and receive second grant from a second communication device, the second grant at least comprising a modulation and coding scheme of service data;
the first grant and the second grant being used for scheduling service data transmission between the first communication device and the second communication device; and
a service data transceiving module, configured to receive, according to the first grant and the second grant received by the grant reception module, service data transmitted by another communication device communicating with the communication device; and/or transmit, according to the first grant and the second grant received by the grant reception module, service data to said another communication device.

Preferably, the second grant further comprises second resource allocation information indicating resources for transmitting the service data, the indicated resources being a subset of the resources allocated by the first resource allocation information.

Also provided is a wireless communication device, comprising:
a reception module, a resource determination module, and a transmission module, wherein,
the reception module is configured to receive first grant from a network node, the first grant at least comprising first resource allocation information for allocating transmission resources of device to device communication service data;
the resource determination module is configured to determine the transmission resources of the service data at least according to the first grant;
the transmission module is configured to transmit second grant to said another communication device, the second grant at least comprising a modulation and coding scheme of the service data.

Preferably, the reception module is further configured to receive device to device communication service data transmitted by another communication device communicating with the communication device in the resources determined by the resource determination module; or
the transmission module is further configured to transmit the device to device communication service data to said another communication device communicating with the communication device in the resources determined by the resource determination module. Preferably, the communication device further comprises a measurement module and a modulation and coding scheme determination module; wherein,
the measurement module is configured to detect a reference signal transmitted by said another communication device and generate a measurement result; and
the modulation and coding scheme determination module is configured to generate modulation and coding scheme information in the second grant according to the measurement result.

Preferably, the communication device further comprises a measurement result reception module and a modulation and coding scheme determination module; wherein,
the measurement result reception module is configured to receive channel condition information transmitted by said another communication device; and
the modulation and coding scheme determination module is configured to generate modulation and coding scheme information in the second grant according to the channel condition information.

Also provided is the present invention provide a wireless communication method, comprising:
allocating resources to Device to Device (D2D) communication between a first communication device and a second communication device;
transmitting first grant to the first communication device and/or the second communication device, the first grant at least comprising first resource allocation information for indicating the resources allocated to the D2D communication.

Preferably, the first resource allocation information includes time-domain resource allocation information and/or frequency-domain resource allocation information, the time-domain resource allocation information indicating subframe locations of the allocated resources, and the frequency-domain resource allocation information indicating physical resource block locations of the allocated resources.

Also provided is a wireless communication control device, comprising a resource allocation module and a transmission module, wherein,
the resource allocation module is configured to allocate resources to Device to Device (D2D) communication between a first communication device and a second communication device; and
the transmission module is configured to transmit first grant to the first communication device and/or the second communication device, the first grant at least comprising first resource allocation information for indicating the resources allocated by the resource allocation module to the D2D communication.

The above wireless communication method and apparatus solve the problem of transmission and scheduling during D2D communication, and reduces control signaling overhead compared with cellular communication, and ensures resource utilization during D2D communication.

### Brief Description of Drawings

Fig. 1 is a diagram of cellular communication when two UEs are located in a cell of the same base station in the related technologies;
Fig. 2 is a diagram of D2D communication;
Fig. 3 is a diagram of a structure of a communication system in an embodiment;
Fig. 4 is a diagram of constitution of a radio frame of an LTE/LTE-A system;
Fig. 5 is a diagram of constitution of a physical resource block of an LTE/LTE-A system;
Fig. 6 is a diagram of a location relationship between resources indicated by first grant and resources indicated by second grant in a specific embodiment; and
Fig. 7 is a diagram of a location of second grant in a specific embodiment.

### Preferred Embodiments of the Present Invention

The present invention will be described by taking a 3rd Generation Partnership Project (3GPP) Long Term Evolution (LTE for short)/LTE-Advanced (LTE-A) system as the background, but it does not constitute the improper definition of the present invention. In the case of no conflict, the embodiments of the present application and the features in the embodiments could be combined randomly with each other.

As shown in Fig. 3, the present embodiment discloses a communication device, i.e., a first communication device in Fig. 3, comprising a grant reception module. The grant reception is configured to receive first grant from a network node, and receive second grant from another communication device in D2D communication with the communication device. The first grant at least comprises first resource allocation information for allocating resources; the second grant at least comprises a modulation and coding scheme for indicating a modulation scheme and a coding rate of service data; and the first grant and the second grant are used for scheduling service data transmission between the first communication device and the second communication device.

The communication device further comprises a service data transceiving module, configured to receive, according to the first grant and the second grant received by the grant reception module, service data transmitted by another communication device communicating with the communication device; and/or transmit, according to the first grant and the second grant received by the grant reception module, service data to another communication device.

The second grant further comprises second resource allocation information indicating resources for transmitting the service data, the indicated resources being a part of the resources allocated by the first resource allocation information.

The first grant is high-layer signaling, and is carried through radio resource control signaling.

The second grant is physical layer signaling, and is transmitted in a format of control information.

The present embodiment further discloses another communication device, i.e., a second communication device in Fig. 3, comprising a reception module, a resource determination module, and a transmission module, wherein,
the reception module is configured to receive first grant from a network node, the first grant at least comprising first resource allocation information for allocating transmission resources of D2D communication service data;
the resource determination module is configured to determine the transmission resources of the service data at least according to the first grant;
the transmission module is configured to transmit second grant to another communication device, the second grant at least comprising a modulation and coding scheme of the service data.

The reception module is further configured to receive D2D communication service data transmitted by another communication device in D2D communication with the communication device in the resources determined by the resource determination module; or
the transmission module is further configured to transmit the D2D communication service data to another communication device in D2D communication with the communication device in the resources determined by the resource determination module.

The resource determination module is configured to determine the resources allocated by the first grant as resources for transmitting the service data, or determine a part of resources allocated by the first grant as the resources for transmitting the service data.

The communication device further comprises a measurement module and a modulation and coding scheme determination module; wherein, the measurement module is configured to detect a measurement reference signal transmitted by another communication device and generate a measurement result; and the modulation and coding scheme determination module is configured to generate modulation and coding scheme information in the second grant according to the measurement result.

The communication device further comprises a measurement result reception module. The measurement result reception module is configured to receive channel condition information transmitted by another communication device; and the modulation and the coding scheme determination module is configured to generate modulation and coding scheme information in the second grant according to the channel condition information.

The present embodiment further provides a wireless communication control device, as shown in Fig. 3, comprising a resource allocation module and a transmission module; wherein, the resource allocation module is configured to allocate resources to D2D communication; and the transmission module is configured to transmit first grant to a communication device, the first grant at least comprising first resource allocation information for indicating the resources allocated by the resource allocation module to the D2D communication.

The wireless communication system of the present scheme includes the above wireless communication device and wireless communication control device.

A wireless communication method corresponding to the above system includes: transmitting first grant to a first communication device and/or a second communication device through a network node, and the second communication device transmitting second grant to the first communication device;
the first grant at least includes first resource allocation information for allocating resources; and the second grant at least includes a modulation and coding scheme for indicating a modulation scheme and a coding rate of service data;
the second communication device transmits the service data to the first communication device in the allocated resources, or the first communication device transmits the service data to the second communication device in the allocated resources.

The second grant further comprises second resource allocation information indicating resources for transmitting the service data, the indicated resources being a subset of the resources allocated by the first resource allocation information.

The first resource allocation information includes time-domain resource allocation information and/or frequency-domain resource allocation information, the time-domain resource allocation information indicating subframe locations, and the frequency-domain resource allocation information indicating physical resource block locations.

The second grant is transmitted while transmitting the service data; or the second grant is used for semi-persistent scheduling, and is transmitted only in an initialized or re-initialized semi-persistent scheduling period.

A resource location for transmitting the second grant is fixed, and the first communication device detects the second grant at the fixed location; or
the first grant indicates a resource location for transmitting the second grant, and the first communication device detects the second grant according to the indication; or
the first communication device perform blind decoding for the second grant in the resources allocated by the first grant.

The first grant further comprises one or more of the following information: a power control command for determining a transmission power of the service data; precoding information for indicating the transmission precoding matrix index and/or the number of transmission ports of the service data and/or second grant; and reference signal information for indicating a cyclic shift and/or an orthogonal cover code of a demodulation reference signal of the service data.

The first grant is high-layer signaling, and is carried through radio resource control signaling.

The second grant further comprises one or more of the following information: a power control command for determining a transmission power of the service data; precoding information for indicating the number of transmission ports and/or a transmission precoding matrix index of the service data; and reference signal information for indicating a cyclic shift and/or an orthogonal cover code of a demodulation reference signal of the service data.

The second grant is physical layer signaling, and is transmitted in a format of control information.

The modulation and coding scheme is determined by the second communication device according to a measurement result fed back by the first communication device; or the modulation and coding scheme is determined by the second communication device measuring a reference signal transmitted by the first communication device.

It should be illustrated that the network node includes a base station, a Node B, an evolved NodeB/enhanced Node B (eNB for short), a relay station or a relay node (relay or RN for short) with an independent physical cell identity, an access node in a Local Area Network (LAN for short), a UE with more powerful capability (for example, a UE with a relay capability, i.e., the UE can relay data of other UEs in a network), a D2D communication server and so on; and the communication device includes but not limited to an LTE/LTE-A UE, a media server, a relay station without an independent physical cell identity, a relay station with the same identity as the physical cell identity of the current cell, i.e., the D2D communication described in the present scheme includes communication between UEs, communication between a relay station and the UE, and communication between the media server and the UE.

In typical embodiments of the present scheme, the network node transmits first grant to both a first communication device and a second communication device, and the second communication device transmits second grant to the first communication device, and the second communication device transmits service data to the first communication device after performing processing, such as encoding and modulation, on the data by using a modulation and coding scheme in the second grant in the resource locations for transmitting the service data in the first grant, and the first communication device receives data according to the resource locations for transmitting service data in the first grant, and performs processing, such as decoding and demodulation, on the received data according to the modulation and coding scheme in the second grant. In the present scheme, when the network node only transmits the grant to one of two communication devices, it may be set in the other communication device that the first grant is known by default, or the other communication device learns the first grant from another network element.

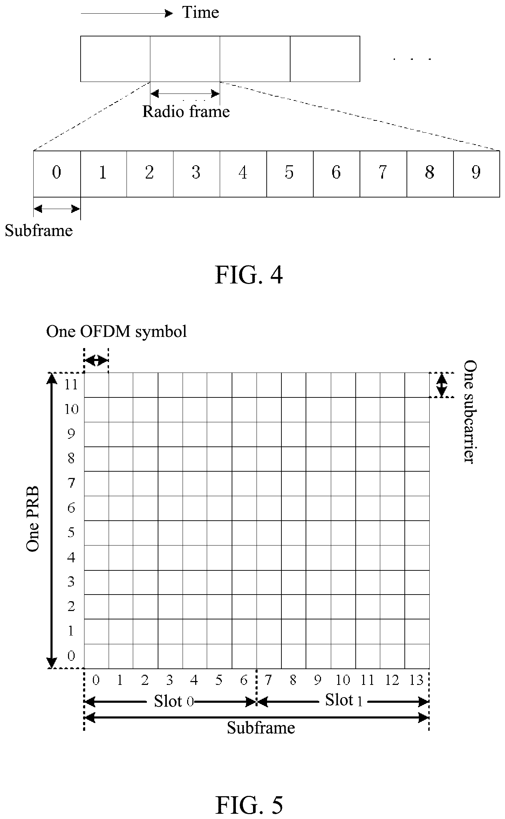

The downlink of the LTE/LTE-A system is based on the Orthogonal Frequency Division Multiplexing Access (OFDMA for short) technology, and the uplink uses the Single carrier-Frequency Division Multiplexing Access (SC-FDMA) multi-access mode. In the OFDMA/SC-FDMA system, the communication resources are in a time-frequency 2-dimensional form. For example, for the LTE/LTE-A system, as shown in Fig. 4, all communication resources of the uplink and downlink are divided in units of radio frames (frames for short) in the time direction, each radio frame has a length of 10ms including 10 subframes with a length of 1ms, and each subframe has two slots with a length of 0.5ms. According to the difference between lengths of the Cyclic Prefixes (CPs for short), each slot includes 7 or 6 OFDM/SC-FDM symbols, wherein, 7 and 6 correspond to a normal CP and an extended CP respectively.

In the frequency direction, the communication resources of the uplink and the downlink are divided in units of subcarriers. Specifically, in communication, the smallest unit of the resource allocation is Resource Block (RB for short), which corresponds to one Physical RB (PRB for short) of the physical resources. As shown in Fig. 5, one PRB includes 12 subcarriers in the frequency domain, and the 12 subcarriers correspond to one slot in the time domain. A resource corresponding to one subcarrier on each OFDM/SC-FDM symbol is referred to as a Resource Element (RE for short).

In the LTE/LTE-A cellular communication system, service data is transmitted in a Downlink Shared Channel (DL-SCH) and an Uplink Shared Channel (UL-SCH), which correspond to a Physical Downlink Shared Channel (PDSCH) and a Physical Uplink Shared Channel (PUSCH) of a physical layer. In addition, for data transmission in a shared channel, it needs to be indicated by corresponding control information, and the indicated contents include resource allocation, i.e., resource locations of the data transmission, a modulation and coding scheme, power control information, Multi-In Multi-Out (MIMO) related information etc. In cellular communication, the above control information is transmitted through a Physical Downlink Control Channel (PDCCH) in a form of Downlink Control Information (DCI).

For D2D communication based on an LTE/LTE-A cellular system, the communication is based on a licensed spectrum, i.e., the cellular communication and the D2D communication will occupy the same spectrum. Therefore, improper scheduling may cause serious interference between the D2D communication and the cellular communication. On the other hand, in the D2D communication process, the network side will not participate in transmission of service data, and may only participate in control of the D2D communication. However, if the communication process is completely controlled by the network side, which is equivalent to the network side needing to collect all information related to the scheduling, and it may result in increase of signaling feedback overhead and control signaling overhead, thus causing increase of the communication delay and reduction of resource utilization.

### Specific embodiment one

According to the wireless communication method of the present embodiment, a network node transmits first grant to a reception device (first communication device) of D2D communication and/or a transmission device (second communication device) of the D2D communication, and the transmission device (second communication device) of the D2D communication transmits second grant and service data to the reception device (first communication device) of the D2D communication. Wherein, the first grant at least includes resource allocation information, and the second grant at least includes a modulation and coding scheme.

In the present example, the first grant is transmitted by way of high-layer signaling. For example, when establishing a D2D link, the network node (for example, a base station eNB) transmits first grant to the first communication device and/or the second communication device through high-layer signaling such as Radio Resource Control (RRC) signaling, to indicate the allocated resources for D2D communication.

In the present example, the second grant is transmitted dynamically by way of physical layer signaling. For example, the second communication device such as a UE or a media server or a relay station transmits the second grant and service data to the first communication device in the allocated resources, and the service data may be transmitted in a format of PUSCH or PDSCH of the LTE/LTE-A system. Wherein, the second grant at least includes a Modulation and Coding Scheme (MCS), which is used to indicate a MCS level and/or a redundancy version of the service data.

Alternatively, the second grant is transmitted by way of Semi-Persistent Scheduling (SPS). For example, when the second communication device, such as a UE or a media server or a relay station, transmits service data (for example, in a format of PUSCH or PDSCH) to the first communication device in the allocated resources, the second grant is transmitted once only in an initialized or re-initialized SPS transmission period, wherein, the second grant at least includes a MCS, which is used to indicate the MCS level and/or redundancy version of the service data.

Preferably, in the present example, the first grant further includes any of the following information or a combination thereof: a power control command for indicating a transmission power of the service data to the first communication device and/or the second communication device; precoding information for indicating a transmission Precoding Matrix Index (PMI) and/or the number of transmission ports of the second grant and/or the service data; and reference signal information for indicating an Orthogonal Cover Code (OCC) and/or a cyclic shift of a demodulation reference signal of the service data.

Preferably, in the present example, the second grant comprises any one of the following information or a combination thereof: precoding information for indicating a transmission PMI and/or the number of transmission ports of the service data; and reference signal information for indicating an OCC and/or a cyclic shift of a demodulation reference signal of the service data.

### Specific embodiment two

According to the wireless communication method of the present embodiment, a network node transmits first grant to a transmission device (second communication device) of the D2D communication and/or a reception device (first communication device) of D2D communication, and the transmission device (second communication device) of the D2D communication transmits second grant to the reception device (first communication device) of the D2D communication. Wherein, the first grant at least includes first resource allocation information, and the second grant at least includes second resource allocation information and a modulation and coding scheme.

In the present example, the first grant is transmitted by way of high-layer signaling. For example, when establishing a D2D link, the network node (for example, a base station eNB) transmits first grant to the first communication device, for example a UE, and/or the second communication device, for example a UE or a media server or a relay station, through high-layer signaling such as RRC signaling, to indicate the allocated resources for D2D communication.

In the present example, the second grant is transmitted dynamically by way of physical layer signaling. For example, the second communication device such as a UE or a media server or a relay station transmits the second grant and service data (for example, in a format of PUSCH or PDSCH) to the first communication device in the allocated resources, wherein, the second grant at least includes the second resource allocation information and a MCS. The second resource allocation information is used to indicate resources occupied by the service data transmission, i.e., the second resource allocation information further allocates resources for the second communication device transmitting the service data to the first communication device on basis of resources allocated by the first resource allocation information in the first grant. The MCS in the second grant is used to indicate the transmission MCS level and/or a redundancy version of the service data.

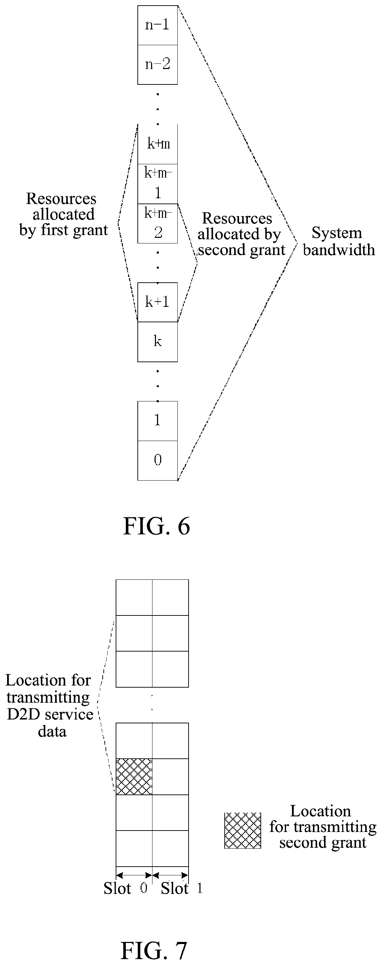

A specific example is as shown in Fig. 6. Each block represents a pair of RBs, and the system bandwidth is n RBs. Wherein, the resources allocated by the first resource allocation information in the first grant are m RBs numbered from k+1 to k+m, and the resource allocation is semi-static allocation. When transmitting the service data, the second communication device, for example a UE or a media server or a relay station, further allocates a part of RBs from the m RBs for the second communication device transmitting service data to the first communication device, and the allocated RBs in the figure are m-2 RBs numbered from k+1 to k+m-2; and other RBs allocated by the first grant may be allocated to other devices, for use in communication between other devices. The second grant is transmitted in the resources allocated by the first grant.

Preferably, in the present example, the first grant further includes any of the following information or a combination thereof: a power control command for indicating a transmission power of the service data to the first communication device and/or the second communication device; precoding information for indicating a transmission PMI and/or the number of transmission ports of the service data and/or the second grant; and reference signal information for indicating an OCC and/or a cyclic shift of a demodulation reference signal of the service data.

Preferably, in the present example, the second grant further comprises any one of the following information or a combination thereof: precoding information for indicating a transmission precoding matrix index and/or the number of transmission ports of the service data; and reference signal information for indicating an OCC and/or a cyclic shift of a demodulation reference signal of the service data.

In the present example, it may also be possible that the first communication device is scheduled by the second communication device to transmit the second grant, i.e., the service data is transmitted by the first communication device to the second communication device in the allocated resources, and the second communication device receives the service data in the allocated resources. The second grant indicates the resource allocation and the MCS of the service data, which will not be described here any more.

Further, the second grant of the present example may also be used for SPS, i.e., the second grant is transmitted once only in an initialized or re-initialized SPS transmission period, which will not be described here any more.

### Specific embodiment three

The second communication device determines the MCS level in the second grant at least according to a channel measurement result. The channel measurement result is obtained by the second communication device measuring a reference signal transmitted by the first communication device; or the first communication device obtains the channel measurement result by measuring the reference signal transmitted by the second communication device, and feeds back the channel measurement result to the second communication device. The reference signal may be one or more of the following signals: a Demodulation Reference Signal (DMRS), a Sounding Reference Signal (SRS), a random access preamble, a Channel State Information Reference Signal (CSI-RS), and a D2D communication dedicated reference signal.

### Specific embodiment four

The present example gives an illustrative description of the first grant.

The first grant at least includes resource allocation signaling. Further, the resource allocation signaling includes at least one of the following two allocations: time domain resource allocation and frequency domain resource allocation.

Wherein, the time-domain resource allocation is used to determine time-domain resource locations of D2D communication, i.e., subframe locations. The indication mode may be in a form of bitmap. For example, 6 bits, 24 bits, 10 bits, 40 bits, or 8 bits are used to indicate subframe locations, wherein, if a bit is set to 1, it means that a subframe represented by the bit is a D2D transmission subframe (i.e., the resources in the subframe can be allocated for D2D transmission). For a condition of 6 bits, in the FDD mode, each bit represents {1, 2, 3, 6, 7, 8} subframe of each downlink radio frame; and in the TDD mode, each bit represents {2, 3, 4, 7, 8, 9} subframe (subframe numbered from 0 to 9) of each radio frame, or first 5 bits represent {3, 4, 7, 8, 9} subframes of each radio frame, and the last bit is not used. In the TDD mode, the uplink subframes will not be allocated, i.e., if the above bits correspond to the uplink subframes, they will be ignored. Another explanation of 6 bits is that each bit represents {2, 3, 4, 7, 8, 9} subframes of each radio frame, only representing allocation of uplink subframes, and the downlink subframes will not be allocated, i.e., if the above bits correspond to downlink subframes, they will be ignored. For a condition of 24 bits, it is similar to the condition of 6 bits, however every 24 bits represent D2D subframe indication of 4 radio frames. For a condition of 10 bits, each bit represents uplink subframe allocation of each radio frame, and for the TDD, the downlink subframes will not be allocated, i.e., if the downlink subframes are encountered, they will be skipped. For a condition of 40 bits, it is similar to the condition of 10 bits, but every 40 bits represent subframe indication of 4 radio frames. For a condition of 8 bits, when it is applied in a FDD mode, each bit represents an uplink subframe corresponding to one uplink process, the beginning of 8 bits is a radio frame which meets SFN mod 4 = 0, wherein, SFN represents a system frame number and mod represents a modulo operation. For the TDD system, the allocation method of uplink process may also be used, i.e., for UL-DL configuration of different subframes, uplink subframes corresponding to a part of uplink processes are configured as D2D transmission subframes.

The frequency domain resource allocation is used to determine frequency domain locations of service data transmission of D2D communication, i.e., allocated PRBs. The allocation method may be a resource allocation method during the LTE/LTE-A cellular communication, i.e., three resource allocation methods for resource allocation through resource allocation fields in a DCI format which is defined in the LTE/LTE-A system: Resource Block Group (RBG) allocation (type 0 resource allocation), packet based resource block allocation (type 1 resource allocation), and a tree-type continuous resource block resource allocation (type 2 resource allocation), which will not be described here any more.

### Specific embodiment five

The present example gives an illustrative description of the second grant. Assume that the system configures the uplink subframes of the LTE/LTE-A cellular communication system as D2D subframes, i.e., the second communication device performs D2D transmission to the first communication device in the uplink subframes of the LTE/LTE-A cellular system.

The resource location for transmitting the second grant may be fixed. For example, in the D2D service transmission resources allocated by the first grant, a part of resources are predefined to transmit the second grant, or a resource location for transmitting the second grant is indicated in the first grant at the same time. For example, the resources for transmitting the second grant are predefined or indicated to be a certain RB or a pair of RBs, and as shown in Fig. 7, each block represents a RB, and the predefined or indicated location for transmitting the second grant is the RB illustrated in the shadow of the figure. If the D2D supports multi-antenna transmission, antenna ports for transmitting the second grant may further be predefined or indicated. The predefined resources for transmitting the second grant may also be a part of fixed resources in the RB, for example, symbol resources on both sides of the Demodulation Reference Signal (DMRS) in the resources allocated by the first grant. After detecting the second grant, the first communication device receives or transmits the D2D service data according to the indication of the grant.

Alternatively, a method for transmitting the second grant may be predefined, and the specific transmission location is determined by the first communication device performing blind decoding. For example, the second grant is predefined to be transmitted in a form of RB, and the specific RB location may be determined by the first communication device performing blind decoding in the D2D transmission resources.

In the present example, the second grant at least includes a MCS for indicating the modulation and coding scheme (code rate) used by the service data transmission. The second grant may further include precoding information for indicating a transmission PMI and/or the number of transmission ports of the service data; and reference signal information for indicating a cyclic shift and/or an OCC of a demodulation reference signal of the service data.

Preferably, the second grant may be transmitted in the same subframe as that for the scheduled/indicated service data, or may be transmitted before the service data. Transmitting before the service data means that the second grant transmitted in the current subframe is used to indicate service data transmission in a later D2D subframe.

### Specific embodiment six

The present example gives another illustrative description of the second grant. Assume that the system configures the downlink subframes of the LTE/LTE-A cellular communication system as D2D subframes, i.e., the second communication device performs D2D transmission to the first communication device in the downlink subframes of the LTE/LTE-A cellular system.

The location for transmitting the second grant may be fixed. For example, in the D2D service transmission resources allocated by the first grant, a part of resources are predefined to transmit the second grant, or resource locations for transmitting the second grant are indicated in the first grant at the same time. For example, the resources for transmitting the second grant are predefined or indicated to be a certain RB or a pair of RBs. If the D2D supports multi-antenna transmission, ports for transmitting the second grant may further be predefined or indicated. After detecting the second grant, the first communication device receives or transmits the D2D service data according to the indication of the grant.

Alternatively, a method for transmitting the second grant may be predefined, and the specific transmission location is determined by the first communication device performing blind decoding . For example, the second grant is predefined to be transmitted in a form of RB, and the specific RB location may be determined by the first communication device performing blind decoding in the D2D transmission resources. Preferably, the transmission resources are resources allocated by the first grant.

In one embodiment, the second grant at least includes a MCS for indicating the modulation scheme and coding scheme (code rate) used by the service data transmission. The second grant may further include precoding information for indicating a transmission PMI and/or the number of transmission ports of the service data; and reference signal information for indicating an OCC and/or a cyclic shift of a demodulation reference signal of the service data.

In another embodiment, the second grant at least includes second resource allocation signaling and a MCS. The second resource allocation information is used to further allocate resources for the second communication device transmitting the service data to the first communication device on basis of resources allocated by the first grant.

It should be illustrated that, in the case of no conflict, the embodiments of this application and the features in the embodiments could be combined randomly with each other.

Of course, the present invention can have a plurality of other embodiments. Those skilled in the art can make various corresponding changes and variations according to the present invention, and all these corresponding changes and variations should belong to the protection scope of the appended claims in the present invention.

A person having ordinary skill in the art can understand that all or a part of steps in the above method can be implemented by programs instructing related hardware, which can be stored in a computer readable storage medium, such as a read-only memory, a disk or a disc etc. Alternatively, all or a part of steps in the above embodiments can also be implemented by one or more integrated circuits. Accordingly, each module/unit in the above embodiments can be implemented in the form of hardware, or can also be implemented in the form of software functional module. The present invention is not limited to any particular form of a combination of hardware and software.

### Industrial Applicability

The above wireless communication method and apparatus solve the problem of transmission and scheduling during D2D communication, and reduces control signaling overhead compared with cellular communication, and ensures resource utilization during D2D communication.

## Claims

1. A wireless communication method, applied in a Long Term Evolution, LTE, network, comprising:
a first communication device receiving first grant from a network node, wherein the first grant comprises first resource allocation information for allocating resources;
the first communication device receiving second grant from a second communication device, wherein the second grant comprises a modulation and coding scheme of service data, and second resource allocation information indicating resources for transmitting service data, the indicated resources being a subset of resources allocated by the first resource allocation information;
wherein, the first grant is high-layer signaling, carried through radio resource control signaling, the second grant is physical layer signaling, transmitted in a format of control information;
the first grant and the second grant being used for scheduling service data transmission between the first communication device and the second communication device; and
the first communication device receiving, according to the scheduling, service data transmitted by the second communication device; and/or the first communication device transmitting, according to the scheduling, service data to the second communication device.

2. The method according to claim 1, wherein,
the first resource allocation information includes time-domain resource allocation information and/or frequency-domain resource allocation information, the time-domain resource allocation information indicating subframe locations, and the frequency-domain resource allocation information indicating physical resource block locations;
or
the second grant is transmitted while transmitting the service data; or the second grant is used for semi-persistent scheduling, and is transmitted in an initialized or re-initialized semi-persistent scheduling period;
or
a resource location for transmitting the second grant is fixed, and the first communication device detects the second grant at the fixed location; or
the first grant indicates a resource location for transmitting the second grant, and the first communication device detects the second grant according to the indication; or
the first communication device performs blindly decoding on the second grant in resources allocated by the first grant;
or
the modulation and coding scheme is determined by the second communication device according to a measurement result fed back by the first communication device; or the modulation and coding scheme is determined by the second communication device measuring a reference signal transmitted by the first communication device.

3. The method according to claim 1, wherein,
the second grant further comprises any one of following information or a combination thereof: a power control command for determining a transmission power of the service data; precoding information for indicating a transmission precoding matrix index and/or the number of transmission ports of the service data; and reference signal information for indicating an orthogonal cover code and/or a cyclic shift of a demodulation reference signal of the service data.

4. A wireless communication device, applied in a Long Term Evolution, LTE, network, comprising:
a grant reception module, configured to receive first grant from a network node, wherein the first grant comprises first resource allocation information for allocating resources;
said grant reception module also configured to receive a second grant from a second communication device, wherein the second grant comprises a modulation and coding scheme of service data, and second resource allocation information indicating resources for transmitting the service data, the indicated resources being a subset of resources allocated by the first resource allocation information; wherein the first grant is high-layer signaling, carried through radio resource control signaling, the second grant is physical layer signaling, transmitted in a format of control information; the first grant and the second grant being used for scheduling service data transmission between the first communication device and the second communication device; and
a service data transceiving module, configured to receive, according to the first grant and the second grant, service data transmitted by another communication device communicating with the communication device; and/or transmit, according to the first grant and the second grant, service data to said another communication device.

5. The wireless communication device according to claim 4, wherein, the second grant further comprises any one of following information or a combination thereof: a power control command for determining a transmission power of the service data; precoding information for indicating a transmission precoding matrix index and/or the number of transmission ports of the service data; and reference signal information for indicating an orthogonal cover code and/or a cyclic shift of a demodulation reference signal of the service data.

6. A wireless communication device, applied in a Long Term Evolution, LTE, network, comprising:
a reception module, a resource determination module, and a transmission module, wherein,
the reception module is configured to receive first grant from a network node, wherein the first grant comprises first resource allocation information for allocating transmission resources of device to device communication service data;
the resource determination module configured to determine the transmission resources of the service data at least according to the first grant;
the transmission module is configured to transmit second grant to another communication device, wherein the second grant comprises a modulation and coding scheme of the service data, and second resource allocation information indicating resources for transmitting the service data, the indicated resources being a subset of resources allocated by the first resource allocation information; wherein, the first grant is high-layer signaling, carried through radio resource control signaling, the second grant is physical layer signaling, transmitted in a format of control information.

7. The wireless communication device according to claim 6, wherein,
the reception module is further configured to receive the device to device communication service data transmitted by another communication device communicating with the communication device in resources determined by the resource determination module; or
the transmission module is further configured to transmit the device to device communication service data to said another communication device communicating with the communication device in the resources determined by the resource determination module.

8. The wireless communication device according to claim 6 or 7, wherein,
the communication device further comprises a measurement module and a modulation and coding scheme determination module; wherein,
the measurement module is configured to detect a reference signal transmitted by said another communication device and generate a measurement result; and
the modulation and coding scheme determination module is configured to generate modulation and coding scheme information in the second grant according to the measurement result;
or
the communication device further comprises a measurement result reception module and a modulation and coding scheme determination module; wherein,
the measurement result reception module is configured to receive channel condition information transmitted by said another communication device; and
the modulation and coding scheme determination module is configured to generate modulation and coding scheme information in the second grant according to the channel condition information.

## Patentansprüche

1. Ein drahtloses Kommunikationsverfahren, angewendet in einem Long-Term-Evolution(LTE)-Netzwerk, das Folgendes beinhaltet:
eine erste Kommunikationsvorrichtung, die eine erste Bewilligung von einem Netzwerkknoten empfängt, wobei die erste Bewilligung erste Ressourcenzuteilungsinformationen für das Zuteilen von Ressourcen beinhaltet;
wobei die erste Kommunikationsvorrichtung eine zweite Bewilligung von einer zweiten Kommunikationsvorrichtung empfängt, wobei die zweite Bewilligung ein Modulations- und Codierverfahren von Servicedaten und zweite Ressourcenzuteilungsinformationen, die Ressourcen für das Übertragen von Servicedaten angeben, beinhaltet, wobei die angegebenen Ressourcen eine Teilmenge von Ressourcen sind, die durch die ersten Ressourcenzuteilungsinformationen zugeteilt werden;
wobei die erste Bewilligung eine High-Layer-Signalgebung ist, die durch eine Funkressourcensteuerungs-Signalgebung getragen wird, und die zweite Bewilligung eine Physical-Layer-Signalgebung ist, die in einem Format von Steuerungsinformationen übertragen wird;
wobei die erste Bewilligung und die zweite Bewilligung für das Planen einer Servicedatenübertragung zwischen der ersten Kommunikationsvorrichtung und der zweiten Kommunikationsvorrichtung verwendet werden; und
wobei die erste Kommunikationsvorrichtung gemäß der Planung von der zweiten Kommunikationsvorrichtung übertragene Servicedaten empfängt; und/oder die erste Kommunikationsvorrichtung gemäß der Planung Servicedaten an die zweite Kommunikationsvorrichtung überträgt.

2. Verfahren gemäß Anspruch 1, wobei
die ersten Ressourcenzuteilungsinformationen Zeitbereich-Ressourcenzuteilungsinformationen und/oder Frequenzbereich-Ressourcenzuteilungsinformationen umfassen, wobei die Zeitbereich-Ressourcenzuteilungsinformationen Orte von Teilrahmen angeben und die Frequenzbereich-Ressourcenzuteilungsinformationen Orte physikalischer Ressourcenblöcke angeben;
oder
die zweite Bewilligung während des Übertragens der Servicedaten übertragen wird; oder die zweite Bewilligung für eine halbpersistente Planung verwendet wird und in einem initialisierten oder neu initialisierten halbpersistenten Planungszeitraum übertragen wird;
oder
ein Ressourcenort für das Übertragen der zweiten Bewilligung festgelegt ist und die erste Kommunikationsvorrichtung die zweite Bewilligung an dem festgelegten Ort detektiert; oder
die erste Bewilligung einen Ressourcenort für das Übertragen der zweiten Bewilligung angibt und die erste Kommunikationsvorrichtung die zweite Bewilligung gemäß der Angabe detektiert; oder
die erste Kommunikationsvorrichtung in Ressourcen, die durch die erste Bewilligung zugeteilt werden, blindes Decodieren an der zweiten Bewilligung durchführt; oder
das Modulations- und Codierverfahren durch die zweite Kommunikationsvorrichtung gemäß einem Messergebnis, das von der ersten Kommunikationsvorrichtung zurückgemeldet wird, bestimmt wird; oder das Modulations- und Codierverfahren durch die zweite Kommunikationsvorrichtung, die ein von der ersten Kommunikationsvorrichtung übertragenes Referenzsignal misst, bestimmt wird.

3. Verfahren gemäß Anspruch 1, wobei
die zweite Bewilligung ferner irgendwelche der folgenden Informationen oder eine Kombination von diesen beinhaltet: einen Leistungssteuerungsbefehl zum Bestimmen einer Übertragungsleistung der Servicedaten; Vorcodierungsinformationen zum Angeben eines Übertragungs-Vorcodierungsmatrixindex und/oder der Anzahl der Übertragungsports der Servicedaten; und Referenzsignalinformationen zum Angeben eines orthogonalen Abdeckungscodes und/oder einer zyklischen Verschiebung eines Demodulationsreferenzsignals der Servicedaten.

4. Eine drahtlose Kommunikationsvorrichtung, angewendet in einem Long-Term-Evolution(LTE)-Netzwerk, die Folgendes beinhaltet:
ein Bewilligungsempfangsmodul, das konfiguriert ist, um eine erste Bewilligung von einem Netzwerkknoten zu empfangen, wobei die erste Bewilligung erste Ressourcenzuteilungsinformationen für das Zuteilen von Ressourcen beinhaltet; wobei das Bewilligungsempfangsmodul ebenfalls konfiguriert ist, um eine zweite Bewilligung von einer zweiten Kommunikationsvorrichtung zu empfangen, wobei die zweite Bewilligung ein Modulations- und Codierverfahren von Servicedaten und zweite Ressourcenzuteilungsinformationen, die Ressourcen für das Übertragen der Servicedaten angeben, beinhaltet, wobei die angegebenen Ressourcen eine Teilmenge von Ressourcen sind, die durch die ersten Ressourcenzuteilungsinformationen zugeteilt werden; wobei die erste Bewilligung eine High-Layer-Signalgebung ist, die durch eine Funkressourcensteuerungs-Signalgebung getragen wird, und die zweite Bewilligung eine Physical-Layer-Signalgebung ist, die in einem Format von Steuerungsinformationen übertragen wird; wobei die erste Bewilligung und die zweite Bewilligung für das Planen einer Servicedatenübertragung zwischen der ersten Kommunikationsvorrichtung und der zweiten Kommunikationsvorrichtung verwendet werden; und
ein Servicedaten-Sende-/Empfängermodul, das konfiguriert ist, um gemäß der ersten Bewilligung und der zweiten Bewilligung Servicedaten zu empfangen, die von einer anderen Kommunikationsvorrichtung, die mit der Kommunikationsvorrichtung kommuniziert, übertragen werden; und/oder um gemäß der ersten Bewilligung und der zweiten Bewilligung Servicedaten an die andere Kommunikationsvorrichtung zu übertragen.

5. Drahtlose Kommunikationsvorrichtung gemäß Anspruch 4, wobei die zweite Bewilligung ferner irgendwelche der folgenden Informationen oder eine Kombination von diesen beinhaltet: einen Leistungssteuerungsbefehl zum Bestimmen einer Übertragungsleistung der Servicedaten; Vorcodierungsinformationen zum Angeben eines Übertragungs-Vorcodierungsmatrixindex und/oder der Anzahl der Übertragungsports der Servicedaten; und Referenzsignalinformationen zum Angeben eines orthogonalen Abdeckungscodes und/oder einer zyklischen Verschiebung eines Demodulationsreferenzsignals der Servicedaten.

6. Eine drahtlose Kommunikationsvorrichtung, angewendet in einem Long-Term-Evolution(LTE)-Netzwerk, die Folgendes beinhaltet:
ein Empfangsmodul, ein Ressourcenbestimmungsmodul und ein Übertragungsmodul, wobei
das Empfangsmodul konfiguriert ist, um eine erste Bewilligung von einem Netzwerkknoten zu empfangen, wobei die erste Bewilligung erste Ressourcenzuteilungsinformationen für das Zuteilen von Übertragungsressourcen von Servicedaten einer Vorrichtung-zu-Vorrichtung-Kommunikation beinhaltet;
das Ressourcenbestimmungsmodul konfiguriert ist, um die Übertragungsressourcen der Servicedaten mindestens gemäß der ersten Bewilligung zu bestimmen;
das Übertragungsmodul konfiguriert ist, um eine zweite Bewilligung an eine andere Kommunikationsvorrichtung zu übertragen, wobei die zweite Bewilligung ein Modulations- und Codierverfahren der Servicedaten und zweite Ressourcenzuteilungsinformationen, die Ressourcen für das Übertragen der Servicedaten angeben, beinhaltet, wobei die angegebenen Ressourcen eine Teilmenge von Ressourcen sind, die durch die ersten Ressourcenzuteilungsinformationen zugeteilt werden; wobei die erste Bewilligung eine High-Layer-Signalgebung ist, die durch eine Funkressourcensteuerungs-Signalgebung getragen wird, und die zweite Bewilligung eine Physical-Layer-Signalgebung ist, die in einem Format von Steuerungsinformationen übertragen wird.

7. Drahtlose Kommunikationsvorrichtung gemäß Anspruch 6, wobei das Empfangsmodul ferner konfiguriert ist, um die Servicedaten der Vorrichtung-zu-Vorrichtung-Kommunikation zu empfangen, die von einer anderen Kommunikationsvorrichtung, die mit der Kommunikationsvorrichtung kommuniziert, in Ressourcen, die durch das Ressourcenbestimmungsmodul bestimmt werden, übertragen werden; oder
das Übertragungsmodul ferner konfiguriert ist, um die Servicedaten der Vorrichtung-zu-Vorrichtung-Kommunikation an die andere Kommunikationsvorrichtung, die mit der Kommunikationsvorrichtung kommuniziert, in den Ressourcen, die durch das Ressourcenbestimmungsmodul bestimmt werden, zu übertragen.

8. Drahtlose Kommunikationsvorrichtung gemäß Anspruch 6 oder 7, wobei die Kommunikationsvorrichtung ferner ein Messmodul und ein Modulations- und Codierverfahren-Bestimmungsmodul beinhaltet; wobei
das Messmodul konfiguriert ist, um ein von der anderen Kommunikationsvorrichtung übertragenes Referenzsignal zu detektieren und ein Messergebnis zu erzeugen; und das Modulations- und Codierverfahren-Bestimmungsmodul konfiguriert ist, um in der zweiten Bewilligung Informationen über das Modulations- und Codierverfahren gemäß dem Messergebnis zu erzeugen;
oder
die Kommunikationsvorrichtung ferner ein Messergebnis-Empfangsmodul und ein Modulations- und Codierverfahren-Bestimmungsmodul beinhaltet; wobei das Messergebnis-Empfangsmodul konfiguriert ist, um von der anderen Kommunikationsvorrichtung übertragene Kanalbedingungsinformationen zu empfangen; und
das Modulations- und Codierverfahren-Bestimmungsmodul konfiguriert ist, um in der zweiten Bewilligung Informationen über das Modulations- und Codierverfahren gemäß den Kanalbedingungsinformationen zu erzeugen.

## Revendications

1. Un procédé de communication sans fil, appliqué dans un réseau d'évolution à long terme, LTE, comprenant :
le fait pour un premier dispositif de communication de recevoir un premier octroi en provenance d'un noeud de réseau, le premier octroi comprenant des premières informations d'attribution de ressources servant à attribuer des ressources ;
le fait pour le premier dispositif de communication de recevoir un deuxième octroi en provenance d'un deuxième dispositif de communication, le deuxième octroi comprenant une technique de modulation et de codage de données de service, et des deuxièmes informations d'attribution de ressources indiquant des ressources servant à transmettre des données de service, les ressources indiquées étant un sous-ensemble de ressources attribuées par les premières informations d'attribution de ressources ;
dans lequel, le premier octroi est une signalisation de couche haute, transportée par le biais d'une signalisation de commande de ressources radio, le deuxième octroi est une signalisation de couche physique, transmise dans un format d'informations de commande ;
le fait pour le premier octroi et le deuxième octroi d'être utilisés pour planifier une transmission de données de service entre le premier dispositif de communication et le deuxième dispositif de communication ; et
le fait pour le premier dispositif de communication de recevoir, conformément à la planification, des données de service émises par le deuxième dispositif de communication ; et/ou le fait pour le premier dispositif de communication d'émettre, conformément à la planification, des données de service à destination du deuxième dispositif de communication.

2. Le procédé selon la revendication 1, dans lequel,
les premières informations d'attribution de ressources incluent des informations d'attribution de ressources du domaine temporel et/ou des informations d'attribution de ressources du domaine fréquentiel, les informations d'attribution de ressources du domaine temporel indiquant des emplacements de sous-trame, et les informations d'attribution de ressources du domaine fréquentiel indiquant des emplacements de bloc de ressources physiques ;
ou
le deuxième octroi est transmis pendant la transmission des données de service ; ou le deuxième octroi est utilisé pour une planification semi-persistante, et est transmis dans une période de planification semi-persistante initialisée ou réinitialisée ;
ou
un emplacement de ressources servant à transmettre le deuxième octroi est fixe, et le premier dispositif de communication détecte le deuxième octroi à l'emplacement fixe ; ou
le premier octroi indique un emplacement de ressources servant à transmettre le deuxième octroi, et le premier dispositif de communication détecte le deuxième octroi conformément à l'indication ; ou
le premier dispositif de communication effectue un décodage aveugle sur le deuxième octroi dans des ressources attribuées par le premier octroi ;
ou
la technique de modulation et de codage est déterminée par le deuxième dispositif de communication conformément à un résultat de mesure renvoyé par le premier dispositif de communication ; ou la technique de modulation et de codage est déterminée par le deuxième dispositif de communication en mesurant un signal de référence émis par le premier dispositif de communication.

3. Le procédé selon la revendication 1, dans lequel,
le deuxième octroi comprend en outre l'une quelconque des informations suivantes ou une combinaison de celles-ci : une instruction de commande de puissance servant à déterminer une puissance d'émission des données de service ; des informations de précodage servant à indiquer un indice de matrice de précodage d'émission et/ou le nombre de ports d'émission des données de service ; et des informations de signal de référence servant à indiquer un code de couverture orthogonal et/ou un décalage cyclique d'un signal de référence de démodulation des données de service.

4. Un dispositif de communication sans fil, appliqué dans un réseau d'évolution à long terme, LTE, comprenant :
un module de réception d'octroi, configuré pour recevoir un premier octroi en provenance d'un noeud de réseau, le premier octroi comprenant des premières informations d'attribution de ressources servant à attribuer des ressources ; ledit module de réception d'octroi étant également aussi configuré pour recevoir un deuxième octroi en provenance d'un deuxième dispositif de communication, le deuxième octroi comprenant une technique de modulation et de codage de données de service, et des deuxièmes informations d'attribution de ressources indiquant des ressources servant à transmettre les données de service, les ressources indiquées étant un sous-ensemble de ressources attribuées par les premières informations d'attribution de ressources ; dans lequel le premier octroi est une signalisation de couche haute, transportée par le biais d'une signalisation de commande de ressources radio, le deuxième octroi est une signalisation de couche physique, transmise dans un format d'informations de commande ; le premier octroi et le deuxième octroi étant utilisés pour planifier une transmission de données de service entre le premier dispositif de communication et le deuxième dispositif de communication ; et
un module d'émission-réception de données de service, configuré pour recevoir, conformément au premier octroi et au deuxième octroi, des données de service émises par un autre dispositif de communication communiquant avec le dispositif de communication ; et/ou émettre, conformément au premier octroi et au deuxième octroi, des données de service à destination dudit autre dispositif de communication.

5. Le dispositif de communication sans fil selon la revendication 4, dans lequel,
le deuxième octroi comprend en outre l'une quelconque des informations suivantes ou une combinaison de celles-ci : une instruction de commande de puissance servant à déterminer une puissance d'émission des données de service ; des informations de précodage servant à indiquer un indice de matrice de précodage d'émission et/ou le nombre de ports d'émission des données de service ; et des informations de signal de référence servant à indiquer un code de couverture orthogonal et/ou un décalage cyclique d'un signal de référence de démodulation des données de service.

6. Un dispositif de communication sans fil, appliqué dans un réseau d'évolution à long terme, LTE, comprenant :
un module de réception, un module de détermination de ressources, et un module d'émission, dans lequel,
le module de réception est configuré pour recevoir un premier octroi en provenance d'un noeud de réseau, le premier octroi comprenant des premières informations d'attribution de ressources servant à attribuer des ressources de transmission de données de service de communication de dispositif à dispositif ;
le module de détermination de ressources est configuré pour déterminer les ressources de transmission des données de service au moins conformément au premier octroi ;
le module d'émission est configuré pour émettre un deuxième octroi à destination d'un autre dispositif de communication, le deuxième octroi comprenant une technique de modulation et de codage des données de service, et des deuxièmes informations d'attribution de ressources indiquant des ressources servant à transmettre les données de service, les ressources indiquées étant un sous-ensemble de ressources attribuées par les premières informations d'attribution de ressources ; dans lequel, le premier octroi est une signalisation de couche haute, transportée par le biais d'une signalisation de commande de ressources radio, le deuxième octroi est une signalisation de couche physique, transmise dans un format d'informations de commande.

7. Le dispositif de communication sans fil selon la revendication 6, dans lequel,
le module de réception est en outre configuré pour recevoir les données de service de communication de dispositif à dispositif émises par un autre dispositif de communication communiquant avec le dispositif de communication dans des ressources déterminées par le module de détermination de ressources ; ou
le module d'émission est en outre configuré pour émettre les données de service de communication de dispositif à dispositif à destination dudit autre dispositif de communication communiquant avec le dispositif de communication dans les ressources déterminées par le module de détermination de ressources.

8. Le dispositif de communication sans fil selon la revendication 6 ou la revendication 7, dans lequel,
le dispositif de communication comprend en outre un module de mesure et un module de détermination de technique de modulation et de codage ;
le module de mesure étant configuré pour détecter un signal de référence émis par ledit autre dispositif de communication et générer un résultat de mesure ; et
le module de détermination de technique de modulation et de codage est configuré pour générer des informations de technique de modulation et de codage dans le deuxième octroi conformément au résultat de mesure ;
ou
le dispositif de communication comprend en outre un module de réception de résultat de mesure et un module de détermination de technique de modulation et de codage ; le module de réception de résultat de mesure étant configuré pour recevoir des informations d'état de canal émises par ledit autre dispositif de communication ; et
le module de détermination de technique de modulation et de codage étant configuré pour générer des informations de technique de modulation et de codage dans le deuxième octroi conformément aux informations d'état de canal.
